# EUROPÄISCHE PATENTANMELDUNG

(11) **EP 2 017 780 A1**
(43) Veröffentlichungstag der Anmeldung: **21.01.2009**
(21) Anmeldenummer: 07013465.5
(22) Anmeldetag: 10.07.2007
(51) Int. Cl.: G06Q 30/00, G06F 17/21

(54) **Verfahren zur Gestaltung eines Layouts**

(71) Anmelder: ORT Medienverbund, 47807 Krefeld (DE)
(72) Erfinder: Meuer, Kristian, 47228 Duisburg (DE)
(74) Vertreter: Paul, Dieter-Alfred

(57) **Zusammenfassung**

Die Erfindung betrifft ein Verfahren zur Gestaltung eines Layouts (1), das eine Mehrzahl von Feldern mit Inhalten unterschiedlicher Contenttypen (2) umfasst, durch einen Nutzer mit Hilfe einer elektronischen Datenverarbeitungsvorrichtung, bei welchem
- unterschiedliche Contenttypen (2) definiert werden,
- unterschiedliche Artikeltypen (8) definiert werden, indem jeweils wenigstens ein Feld mit einem Contenttyp (2) verknüpft wird und jedem Artikeltyp (8) mehrere thematisch gleichartige Artikelinhalte (13) des entsprechenden Contenttyps (2) zugeordnet werden,
- wenigstens eine Layoutvorlage (11) erstellt wird, indem eine Mehrzahl von Artikeltypen (8) ausgewählt und innerhalb eines Layoutrahmens positioniert werden,
- der Nutzer eine Layoutvorlage (11) als Basis für das zu gestaltende Layout (1) und ein Produkt auswählt und
- die Layoutvorlage (11) zu dem Layout (1) ausgestaltet wird, indem für das ausgewählte Produkt spezifische Artikelinhalte (13) mit den zugehörigen Artikeltypen (8) der Layoutvorlage (11) verknüpft werden.

## Beschreibung

Die vorliegende Erfindung betrifft ein Verfahren zur Gestaltung eines Layouts für ein Werbemittel oder dergleichen, das eine Mehrzahl von Feldern mit Inhalten unterschiedlicher Contenttypen wie Bilder, Texte und / oder ein Datum umfasst, durch einen Nutzer mit Hilfe einer elektronischen Datenverarbeitungsvorrichtung.

Derartige Verfahren sind im Stand der Technik bekannt und dienen insbesondere dazu, um Werbemittel auszugestalten. Dabei ist es wichtig, dass ein beworbenes Produkt detailliert dargestellt wird und dass das Werbemittel individuell gestaltet werden kann, um verschiedene Zielgruppen gut zu erreichen oder Anpassungen für verschiedene lokale Bereiche oder Absatzwege vorzunehmen. Beispielhaft kann hier z.B. die Werbung eines Automobilherstellers für ein neues Fahrzeugmodell genannt werden, die einheitlich gestaltet werden muss, um die Markenidentität herauszustellen und davon zu profitieren.

Da der Verkauf von Automobilen und damit auch die Werbung über lokale Händler erfolgt, muss sichergestellt werden, dass die Werbung einerseits den Ansprüchen der Corporate Identity genügt, der Händler aber andererseits auch die Möglichkeit erhält, die Werbung nach seinen eigenen Wünschen zu gestalten. So ist es erforderlich, dass der Händler seine Daten und insbesondere seine speziellen Angebote in die Werbung aufnehmen kann.

Um diesen Ansprüchen zu genügen, wird in der Regel zunächst eine Layout-Vorlage - beispielsweise durch den Automobilhersteller - erzeugt, welcher den Rahmen vorgibt, wie eine Zeitungswerbung oder dergleichen auszusehen hat. Eine solche Layout-Vorlage umfasst verschiedene Felder, die jeweils mit Bildern, Textinhalten oder dergleichen gefüllt werden können. Dabei gibt die Layout-Vorlage vor, mit welchen Contenttypen die einzelnen Felder belegt werden können. Zum Teil werden dabei die Inhalte der Felder statisch vorgegeben, so dass sie durch einen Benutzer nicht mehr verändert werden können. Es gibt jedoch auch Felder, die durch eine Auswahl des Nutzers, in diesem Beispiel des Autohändlers, mit Inhalten gefüllt werden. Beispielsweise kann durch die Vorgabe der Modellversion 'Kombi' automatisch ein entsprechendes Bild dieses Modells eingefügt werden. Das Layout, das so in einem ersten Bearbeitungsschritt generiert wird, kann danach durch den Nutzer bearbeitet werden, wobei dieser auf alle Felder des erstellten Layouts vollständigen Zugriff hat. Somit ist es dem Nutzer möglich, das Layout nach seinen Vorstellungen komplett neu zu gestalten, wodurch der Nutzer beispielsweise sein Händlerlogo in das Layout einbringen oder die Händleradresse vergrößert darstellen kann.

Nachteilig wird bei diesem Stand der Technik angesehen, dass der Nutzer Zugriff auf alle Felder des erstellten Layouts hat und es keine Vorgaben bezüglich der zu editierenden Komponenten des Layouts gibt. Damit können globale Vorgaben, die zum Beispiel hinsichtlich einer Firmenidentität gemacht werden, oder Strategien zur Erstellung von mehreren thematisch zusammenhängenden Layouts nicht zuverlässig umgesetzt werden, da der Nutzer bei der Bearbeitung alle strategischen Vorgaben umgehen kann. Der Nutzer erhält aus dem Layout auch keinerlei Informationen, welche Komponenten durch ihn zu bearbeiten sind, was andererseits dazu führen kann, dass die notwendige Bearbeitung durch den Nutzer unterbleibt.

Aufgabe der Erfindung ist daher, ein Verfahren zur Gestaltung eines Layouts zur Verfügung zu stellen, bei dem das Layout unter Einhaltung von globalen Vorgaben erstellt wird, die globalen Vorgaben durch den Nutzer nicht umgangen werden können und der Aufwand für die Gestaltung durch den Nutzer gering ist.

Diese Aufgabe wird durch das Verfahren zur Gestaltung eines Layouts für ein Werbemittel oder dergleichen gelöst, das eine Mehrzahl von Feldern mit Inhalten unterschiedlicher Contenttypen wie Bilder, Texte und / oder ein Datum umfasst, durch einen Nutzer mit Hilfe einer elektronischen Datenverarbeitungsvorrichtung, bei welchem
- unterschiedliche Contenttypen definiert werden,
- unterschiedliche Artikeltypen definiert werden, indem jeweils wenigstens ein Feld mit einem Contenttyp verknüpft wird und jedem Artikeltyp mehrere thematisch gleichartige Artikelinhalte des entsprechenden Contenttyps für Produkte einer Produktgruppe zugeordnet werden,
- wenigstens eine Layoutvorlage erstellt wird, indem eine Mehrzahl von Artikeltypen ausgewählt und innerhalb eines Layoutrahmens positioniert werden,
- der Nutzer eine Layoutvorlage als Basis für das zu gestaltende Layout und ein Produkt auswählt und
- die Layoutvorlage zu dem Layout ausgestaltet wird, indem für das ausgewählte Produkt spezifische Artikelinhalte mit den zugehörigen Artikeltypen der Layoutvorlage unter Bildung konkreter Artikel verknüpft werden.

Bei dem erfindungsgemäßen Verfahren wird zunächst eine Layoutvorlage erstellt, indem mehrere Artikeltypen ausgewählt innerhalb eines Layoutrahmens und positioniert werden. Die Artikeltypen umfassen Felder, die einerseits Informationen für die grafische Gestaltung, wie z.B. die Feldgröße oder Farbe, beinhalten und andererseits Artikelinhalte umfassen, die in diesen Felder dargestellt werden. Die Artikelinhalte basieren auf vordefinierten Contenttypen, welche das Format des Inhalts bestimmen, z.B. ein Bild, eine Adresse oder ein Datum. Dadurch wird sichergestellt, dass alle möglichen Artikelinhalte das gewünschte Format aufweisen und damit das Layout immer korrekt gestaltet ist und nicht beispielsweise ein einzeiliger Text an Stelle eines Datums verwendet wird. Die Artikelinhalte aus dem Speicher können gemäß einer Auswahl durch den Nutzer dynamisch den Artikeltypen zugeordnet werden, sodass die Layoutvorlage automatisch mit den Artikelinhalten gefüllt wird.

Wenn der Nutzer also ein bestimmtes Produkt bewerben will, wird die Layoutvorlage automatisch mit den entsprechenden Produktbildern und den Produktdetails, z.B. als Produktdatentabelle, ausgestaltet. Die Artikeltypen geben dabei vor, welche Artikelinhalte verwendet werden.

Vorteilhaft ist dabei, dass die ausgewählte Layoutvorlage automatisch mit Artikelinhalten gemäß den Vorgaben des Nutzers gefüllt wird. Somit ist sichergestellt, dass globale Vorgaben immer eingehalten werden, insbesondere die Vorgaben bezüglich einer einheitlichen Unternehmensidentität. Außerdem ist dieses Verfahren mit einem sehr geringen Aufwand für den Nutzer verbunden, da sowohl Layoutvorlagen, Artikeltypen und auch Artikelinhalte vorgegeben werden. Die Pflege der Inhalte obliegt nicht dem Nutzer.

In Ausgestaltung dieser Ausführungsform werden wenigstens einem Artikeltyp mehrere Artikelinhalte zu demselben Produkt zugeordnet, und der Nutzer kann bei der Ausgestaltung des Layouts in einem Editierschritt einen dieser Artikelinhalte aus dieser Menge auswählen. Wenn beispielsweise ein Artikeltyp derart definiert ist, dass in einem Feld des Layouts das Bild eines Fahrzeugs angezeigt werden soll, erhält der Nutzer nach der Auswahl des konkreten zu bewerbenden Fahrzeugs mehrere Bilder zur Auswahl, die das Feld eingesetzt werden können. Der Nutzer muss dann lediglich entscheiden, welche Bilder die Werbung enthalten soll.

Durch eine Vorauswahl von Artikelinhalten während der Erstellung der Layoutvorlage kann die Bearbeitung gesteuert werden, indem der Nutzer die Vorauswahl als Empfehlung erhält und aktiv die Auswahl von Artikelinhalten, die von der Vorauswahl abweichen, durchführen muss. Auch verringert sich durch die Vorauswahl der Aufwand bei der Bearbeitung, da der Nutzer nur eine Veränderung vornehmen muss, wenn er dies für nötig erachtet, und nicht jede mögliche Auswahl aktiv durchführen muss.

In besonderer Ausgestaltung der Erfindung werden in einer Layoutvorlage wenigstens zwei Artikeltypen jeweils mehrere Artikelinhalte zu einem Produkt zugeordnet sind, wobei die Artikeltypen derart gekoppelt sind, dass durch die Auswahl eines Artikelinhalts für den einen Artikeltyp der Artikelinhalt für den anderen Artikeltyp automatisch gewählt wird. So ist die Verknüpfung der Artikelinhalte verschiedener Artikeltypen möglich, um die Bearbeitung durch den Nutzer einfach zu gestalten und gleichzeitig eine hohe Flexibilität bei der Gestaltung des Layouts zu erreichen. Die Verknüpfung Artikelinhalts eines Artikeltypen kann auch auf mehrere andere Artikelinhalte verschiedener Artikeltypen bezogen sein und damit beliebig komplex gestaltet werden.

In weiterer Ausgestaltung der Erfindung kann in einem Editierschritt der Artikelinhalt von wenigstens einem Artikeltyp durch den Nutzer verändert werden kann. So kann der Nutzer eventuelle Fehler korrigieren und Anpassungen vornehmen, die über die vorgegebene Auswahl von verschiedenen Artikelinhalten hinausgehen. Je nach verwendetem Contenttyp kann die Bearbeitung auf verschiedene Arten durchgeführt werden, der entsprechenden Inhalt muss jedoch immer dem Contenttyp entsprechen.

Insbesondere kann der Nutzer in einem geführten Editierschritt die Bearbeitung des Layouts vornehmen, indem die einzelnen Editierschritte in einer Abfolge zur Bearbeitung angeordnet werden und / oder der Nutzer Benachrichtigungen zu der Durchführung der einzelnen Editierschritte erhält. Die einzelnen Editierschritte können dadurch in einer logischen Abfolge durchgeführt werden und die Benachrichtigungen erleichtern dem Nutzer zusätzlich die Bearbeitung, da er konkrete Informationen zu den einzelnen Editierschritten erhält.

Auch können den Artikeltypen nutzerspezifische Artikelinhalte und / oder zielgruppenspezifische Artikelinhalte zugeordnet sein. So kann im Fall der nutzerspezifischen Artikelinhalte durch einmalige Vorgabe von entsprechenden Artikelinhalten der Aufwand für den Nutzer bei der Ausgestaltung der Layoutvorlage reduziert werden gegenüber dem Fall, dass der Nutzer z.B. seine Kontaktdaten manuell in einem Editierschritt eingeben muss. Ein weiteres Beispiel hierzu wäre eine Auswahl der Sprache von Textfeldern abhängig von dem Nutzer. Dies wirkt sich insbesondere dann positiv aus, wenn der Nutzer wiederholt Layouts nach dem erfindungsgemäßen Verfahren erstellt. Zielgruppenspezifische Artikelinhalte können beispielsweise Werbeaussagen oder besondere Modelldetails in das Layout einfliessen lassen, wodurch die Werbewirkung verglichen mit einheitlich gestalteten Werbemitteln verbessert wird. Dies ermöglicht die Erstellung von personalisierten Werbemitteln, die individuell etwa per Post oder per Email zugestellt werden, wobei die individuellen Interessen der Zielpersonen besonders berücksichtigt werden können. Genauso können nicht personalisierte Werbemittel generiert werden, die beispielsweise öffentlich ausgehängt werden.

Dabei können die Contenttypen grafische Typen und alphanumerische Typen umfassen. Damit können verschiedene Contenttypen definiert werden, um zum Beispiel Textfelder in einem bestimmten Format, mit einer bestimmten Anzahl an Zeilen und/oder Zeichen oder bestimmte alphanumerische Codes, zum Beispiel ein Geburtsdatum oder eine Adresse, zu bilden. durch die Verwendung von spezifischen Contenttypen können falsche Artikelinhalte weitgehend von der Verwendung ausgeschlossen werden und die Bearbeitungsmöglichkeiten der Artikelinhalte spezieller gestaltet werden, wie z.B. die Verwendung eines Kalenders zur Auswahl eines Datums.

In weiterer Ausgestaltung der Erfindung können die Artikeltypen auch Felder einschließen, die andere Artikeltypen enthalten. Dadurch können auf einfache Weise Artikeltypen gebildet werden, indem bereits vorhandene Artikeltypen einbezogen werden. Es ist also nicht nötig, jeden Artikeltyp aus den Contenttypen neu zu gestalten.

Auch können die Artikel zur Verwaltung in globale Kategorien eingeordnet werden. Da die Anzahl der Artikel sehr groß werden kann, ist es dadurch möglich, bestimmte Artikel leicht auszusuchen oder aufzufinden.

Gemäß einer weiteren Ausgestaltung der Erfindung wird das Layout in einer universellen Beschreibungssprache dargestellt. Insbesondere wird das Layout in das XML Format umgewandelt und enthält Variablen, mit denen die Verknüpfungen der Artikeltypen mit dem Speicher realisiert werden. Diese universelle Darstellung des Layouts dient als Ausgangsbasis, um die weitere Bearbeitung durchzuführen. Die Verwendung des XML Formats erlaubt durch die einfache Benutzung der Variablen, dass mit diesem Format alle Anforderungen zur Umsetzung des erfindungsgemäßen Verfahrens erfüllt werden können.

In weiterer Ausgestaltung der Erfindung wird jede Layout-vorlage mit Pageflex-Technologie und unter Benutzung von Filterfunktionen erzeugt. Dadurch wird die Ausgestaltung der Layoutvorlage zu einem Layout unter Beibehaltung der gewünschten variablen Funktionalität, insbesondere der dynamischen Verknüpfung mit den Artikelinhalten, ermöglicht. Die Verwendung alternativer Rendering Technologien, die eine vergleichbare Funktionalität wie Pageflex zur Verfügung stellen, ist hier ebenfalls möglich, ohne dass dies eine Einschränkung der Erfindung bedeuten würde.

Auch kann das Werbemittel mit dem Layout dem Nutzer über eine Shop-Funktion zur Verfügung gestellt werden, wobei auch das Layout des Werbemittels über die Shop-Funktion durch den Nutzer bearbeitet werden kann. Das Werbemittel mit dem Layout kann nach der Bearbeitung durch den Nutzer an einen Arbeitsprozess übergeben werden, in dem das Werbemittel mit dem Layout hergestellt wird. Somit ist klar definiert, an welcher Stelle in dem Verfahren der Nutzer die Bearbeitung des Layouts vornehmen kann. Außerdem ist durch die Shop-Funktion gleichzeitig sichergestellt, dass eine Abrechnungsmöglichkeit sowohl für interne als auch externe Kunden zur Verfügung gestellt wird und dass nur genau die Werbemittel hergestellt werden, die auch von dem Nutzer benötigt und in Auftrag gegeben werden.

Vorzugsweise wird das Layout nach der Bearbeitung des Nutzers in ein anderes Format umgewandelt, wobei als das andere Format das Portable Document Format (PDF) eingesetzt werden kann. Dabei wird die Umwandlung in ein anderes Format mit Pageflex-Technologie durchgeführt. Somit wird sichergestellt, dass das Layout in einem universell darstellbaren Format vorliegt, wobei die Pageflex-Technologie hier wiederum die notwendige Funktionalität zur Verfügung stellt, um das Layout korrekt umzusetzen. Auch hier ist die Verwendung alternativer Rendering Technologien möglich, ohne dass dies die Erfindung einschränken würde.

Im übrigen kann das Layout durch den Nutzer durch die Auswahl von weiteren Artikeln erweiterbar sein. Der Nutzer hat also bei Bedarf auch die Möglichkeit, die vorhandenen Artikel zu nutzen und dabei das Layout auf sehr effiziente Weise zu bearbeiten.

Zusätzlich können für die Contenttypen, die Artikeltypen, die Artikelinhalte, die Textinhalte sowie Inhalte aus einem Adressmodul oder einer Mediengalerie sein können, die Artikel, die globalen Kategorien, die Werbemittel, die Zielgruppen und das Layout jeweils ein Speicher vorgesehen ist, in dem sie abgelegt und verwaltet werden. Dadurch können alle Elemente in dem Speicher organisiert und auch wieder verwendet werden. So kann beispielsweise die Auswahl an Artikeltypen erweitert werden, ohne dass häufig genutzte Artikeltypen jedesmal neu erzeugt werden müssen, oder die Artikel können leicht gemäß den Kategorien abgelegt werden, wobei die auch die Kategorien flexibel sind.

In weiterer Ausgestaltung der Erfindung sind alle Speicher in einem zentralen Speicher zu einer Datenbank zusammengefasst. Dadurch sind einfache Zugriffe auf die einzelnen Elemente möglich, und insbesondere die Verknüpfung der Elemente aus verschieden Speichern wird dadurch vereinfacht. Des weiteren ergeben sich im Vergleich zu verteilten Speichern Performanceverbesserungen und die Datensicherung wird vereinfacht, da nur noch der eine zentrale Speicher gesichert werden muss.

Dabei wird das Verfahren in besonders vorteilhafter Weise in einer Client-Server-Architektur realisiert, wobei der zentrale Speicher auf dem Server vorgesehen ist und die Bearbeitung des Layouts auf wenigstens einem Client durchgeführt wird. Dadurch kann der Nutzer die Bearbeitung durchführen, ohne sich in lokaler Nähe zu dem Server zu befinden, wodurch zusätzlich eine größere Anzahl von Nutzern gleichzeitig dieses Verfahren nutzen kann.

In noch vorteilhafterer Ausgestaltung der Erfindung ist der wenigstens eine Client mit dem Server über das Internet verbunden, wobei die Internetverbindung zwischen dem Server und dem wenigstens einem Client verschlüsselt ist. Somit muss keine besondere Infrastruktur aufgebaut werden, um Client und Server miteinander zu verbinden, da heutzutage eine Internet-Verbindung für die meisten Datenverarbeitungsvorrichtungen gegeben ist. Gleichzeitig wird durch die Verschlüsselung sichergestellt, dass die übertragenen Daten nicht in die Hände von unbefugten Dritten gelangen.

Vorzugsweise wird auch die Shop-Funktion mittels eines Internetshops zur Verfügung gestellt.

Schließlich wird das Layout in einem Internet-Browser dargestellt und bearbeitet, wobei die Bearbeitung des Layouts auf Basis von HTML-Funktionalitäten geschehen kann. Da die meisten Nutzer heutzutage sehr vertraut mit der Nutzung des Internet, der Internet-Browser und der dafür verwendeten HTML-Technologie sind, werden von dem Nutzer keine besonderen Anforderungen oder ein besonderes technisches Verständnis verlangt, um die Bearbeitung des Layouts vornehmen zu können.

Hinsichtlich weiterer vorteilhafter Ausgestaltung der Erfindung wird auf die Unteransprüche sowie nachfolgende Beschreibung eines Ausführungsbeispiels unter Bezugnahme auf die beiliegende Zeichnung verwiesen. In der Zeichnung zeigt:
- Figur 1: die das schematische Vorgehen zur Erstellung eines Layouts,
- Figur 2: ein Beispiel eines Layouts, wie es zur Erzeugung einer Layoutvorlage in seine Komponenten zerlegt wird,
- Figur 3: schematisch die Verknüpfung der Contenttypen zu Artikeltypen, sowie die Ausgestaltung der Artikel.

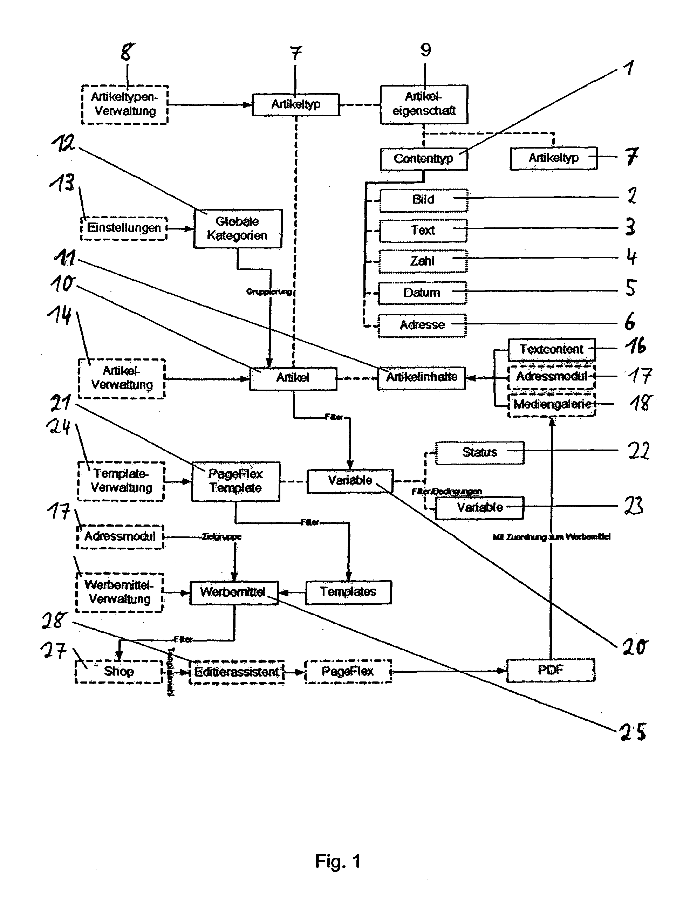

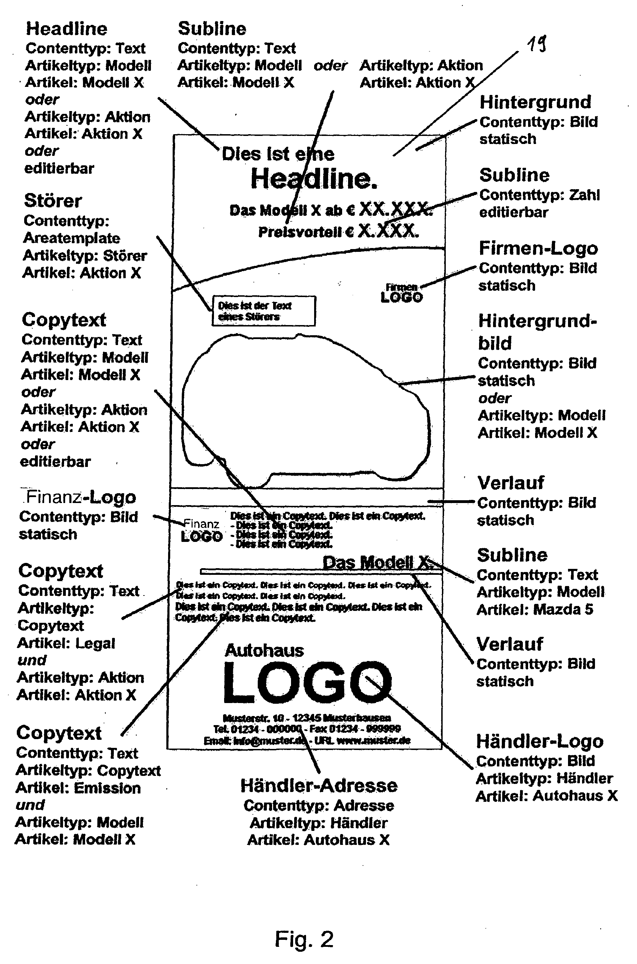

Aus dem in Figur 1 gezeigten Diagramm ist das schematische Vorgehen zur Erstellung eines Layouts 1 ersichtlich. Ein derartiges Layout 1 ist in der Figur 2 gezeigt, wobei das Layout 1 in seine Komponenten zerlegt ist. Die elementaren Bestandteile des Layouts 1 basieren auf den Contenttypen 2, die in der hier gezeigten Ausführungsform ein Bild 3, ein Text 4, eine Zahl 5, ein Datum 6 oder eine Adresse 7 sein können. Jeder Contenttyp 2 kann nur bestimmte Informationen beinhalten, z.B. kann ein Bild 2 nur ein graphisches Element beinhalten, oder ein Datum 5 nur ein numerische Element, das durch eine fest vorgegebene Abfolge von Ziffern und Punkten definiert wird. Eine weitere Unterteilung der Contenttypen 1 in z. B. Bilder verschiedener Formate (Bild und Logo) oder auch weitere durch ihre Formate bestimmte Texttypen ist möglich und kann ggf. projektbezogen durchgeführt werden.

Ein Artikeltyp 8 umfasst wenigstens eine Artikeleigenschaft 9, die eine Kombination aus einem logischen Namen mit einem Contenttypen 2 ist. So kann ein Artikeltyp 8 mit mehreren Artikeleigenschaften 9, die den gleichen Contenttyp 2 enthalten, gebildet werden, da diese Contenttypen 2 als Teil der Artikeleigenschaft 9 eindeutig über einen Namen zugeordnet sind. Dadurch können Artikeltypen 8 leicht mit Inhalten belegt werden, ohne dass es zu einer falschen Zuordnung von Contenttypen 2 gleichen Typs mit den Inhalten kommen kann. Eine Artikeleigenschaft 9 kann außer einem Contenttypen 2 auch einen anderen Artikeltyp 8 umfassen. Dadurch lassen sich einerseits Artikeltypen 8 als kleine und wieder verwendbare Einheiten bilden, und andererseits können Artikeltypen 8 mit vielen Artikeleigenschaften 9 einfach gebildet werden, ohne dass jedes Mal wieder auf die Contenttypen 2 zurückgegriffen werden muss. Für die Identifizierung weisen die Artikeltypen 8 einen Namen auf, über den die Artikeltypen 8 in einer Artikeltypenverwaltung 10 erfasst, verwaltet und gespeichert werden. So können verschiedene Artikeltypen 8 leicht wieder verwendet und über die Artikeltypenverwaltung 10 auch modifiziert werden. Der Artikeltyp 8 stellt die elementare Komponente für die weitere Erstellung des Layouts 1 dar.

Mehrere Artikeltypen 8 werden als grafische Felder zu einer Layoutvorlage 11 kombiniert. Dazu erhalten sie in der Templateverwaltung 12 zusätzlich Informationen zu der Darstellung in dem Layout 1, z.B. die Feldgröße, Farben oder Schriftarten und -größen. Neben der grafischen Erstellung des Layouts 1 ist in der Templateverwaltung 12 die Zuordnung zu Artikelinhalten 13 besonders wichtig. Die Artikelinhalte 13 sind in einem Speicher abgelegt, der in die Bereiche Textcontent 14, Adressmodul 15 und Mediengalerie 16 unterteilt ist, deren Inhalte entsprechend Textelemente, Kontaktdaten von Personen und Firmen und Medien, wie z.B. Bilder verschiedener Formate, sind.

In der Templateverwaltung 12 werden die Artikelinhalte 13 aus dem Speicher ausgewählt und als die Inhalte mit den Artikeltypen 8 verknüpft. Die Verknüpfung kann sowohl statisch sein, sodass ein fester Inhalt für einen Artikeltypen 8 ausgewählt wird, oder auch dynamisch, sodass mehrere Artikelinhalte 13 mit einem Artikeltyp 8 verknüpft sind und erst später einer der Artikelinhalte 13 für das Layout 1 übernommen wird. Die dynamischen Verknüpfungen sind dabei derart gestaltet, dass sowohl der Artikelinhalt 13 z.B. zu einem beworbenen Produkt aus einer Menge an verfügbaren Produkten ausgewählt werden kann, oder auch dass Adressdaten des Nutzers automatisch in ein entsprechendes Feld eines Artikeltypen 8 einfliessen. Zusätzlich sind auch Mehrfachzuordnungen möglich, sodass beispielsweise nach der Vorgabe eines bestimmten Produkts mehrere gleichartige Artikelinhaltes 13 zur Verfügungn gestellt werden, wodurch noch eine Nutzerauswahl des jeweiligen Artikelinhaltes 13 vorgenommen werden muss. Ein Artikelinhalt 13 kann dabei als Vorauswahl vorgegeben werden, sodass der Nutzer nur bei Bedarf einen anderen Artikelinhalt 13 als die Vorgabe auswählen braucht.

Auch wird in der Templateverwaltung 12 festgelegt, ob und wie der Artikelinhalt 13 durch den Nutzer editiert werden soll. Z. B. können Freitextfelder oder Drop-down Auswahlmenüs bereitgestellt werden. Es können auch Abhängigkeiten von verschiedenen Artikelinhalten 13 untereinander geschaffen werden, so dass sich deren Inhalte beeinflussen können. Die Auswahl eines Artikelinhaltes 13 für einen Artikeltyp 8 bedingt in diesem Fall die automatische Auswahl von Artikelinhalten 13 anderer Artikeltypen 8.

Zur Benutzerführung können auch Benachrichtigungen angelegt werden, die nicht Teil des sichtbaren Layouts 1 sind, sondern in einem späteren Editierschritt durch den Nutzer hilfreiche Informationen z.B. zu der Bedeutung einzelner Felder geben. Auch kann die Bearbeitungsreihenfolge für die einzelnen zu bearbeitenden Artikeltypen 8 einer Layoutvorlage 11 definiert werden, sodass der Nutzer in einem logischen Ablauf die einzelnen Editierschritte durchführt. Diese Bearbeitung schließt jeweils auch die Auswahl von Artikelinhalten 13 ein.

Die Erstellung der Layoutvorlage 11 geschieht unter Verwendung von Pageflex Technologie, wodurch eine elektronische Vorlage im XML Format erzeugt wird. Dabei werden die Artikeltypen 8 in Variablen 17 überführt, denen ein Status 18, der die Editierbarkeit angibt, und ein Variableninhalt 19, der mit den Artikelinhalten 11 über Filterbedingungen verknüpft ist, zugeordnet sind. Durch den Status 18 wird dabei festgelegt, ob eine Bearbeitung durch den Nutzer möglich sein soll. Den Variablen 17 werden Filterbedingungen zugeordnet, durch die diese mit den Artikelinhalten 13 verknüpft sind. Die Vorgaben der Layoutvorlage hinsichtlich statischer oder dynamischer Verknüpfung werden dabei identisch umgesetzt. Die Benachrichtigungen werden ebenfalls als Variablen in dem XML Format erzeugt, die jedoch keine graphischen Elemente der Layoutvorlage bilden. Auf diese Weise wird die Layoutvorlage 11 in elektronischer Form zur Verfügung gestellt, die eine Umsetzung der Layoutvorlage 11 darstellt und bereit ist zur Benutzung durch den Nutzer.

Über eine Shop-Funktion 20 wählt der Nutzer eine Layout-vorlage 11 aus und macht Vorgaben, z.B. zu dem beworbenen Produkt oder einer Zielgruppe. Gleichzeitig fliessen Informationen über den Nutzer mit ein, sodass die Layout-vorlage 11 mit den Artikelinhalten 13 unter Bildung von Artikeln 21 ausgestaltet wird. Ein Artikel 21 stellt eine Ausgestaltung eines Artikeltypen 8 dar, wobei die elementaren Contenttypen 2 mit konkreten Artikelinhalten 13 belegt werden. Die Artikel 21 weisen auch einen Namen auf, der eine Identifizierung eines bestimmten Artikels 21 ermöglicht.

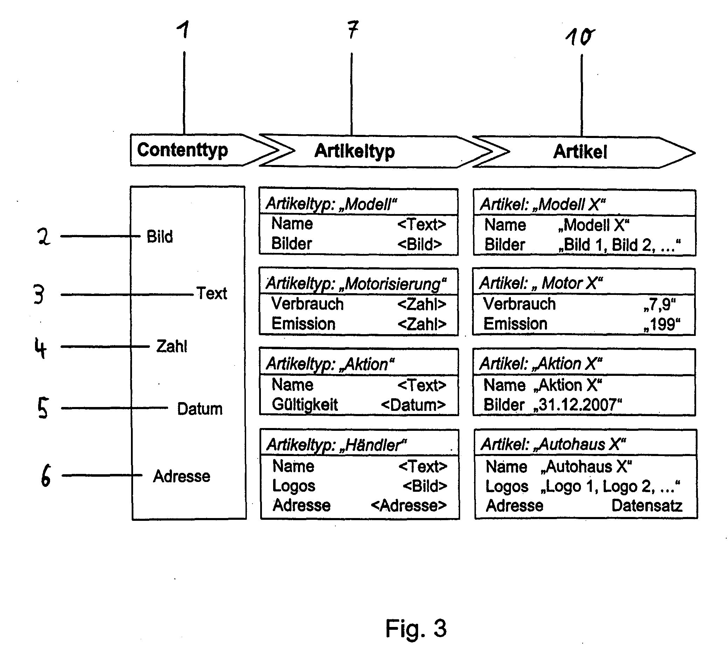

In der Figur 3 ist der Zusammenhang von Contenttypen 2, Artikeltypen 8 und Artikeln 21 gezeigt ist. Der Artikeltyp 8 "Modell" umfasst die zwei Artikeleigenschaften 9 "Name" und "Bilder". Der Artikeleigenschaft 9 "Name" ist der Contenttyp 2 "Text" 4 und der Artikeleigenschaft 9 "Bilder" ist der Contenttyp 2 "Bild" 3 zugeordnet, wodurch eindeutig definiert ist, dass der Artikeleigenschaft 9 "Name" nur ein Textinhalt zugeordnet werden kann und der Artikeleigenschaft 9 "Bilder" nur Bildinhalte zugeordnet werden können. Eine Ausgestaltung des Artikeltypen 9 "Modell" stellt der Artikel 21 "Mazda 5" dar. Die Artikeleigenschaften 9 "Name" wurden mit dem Textinhalt "Mazda 5" und die Artikeleigenschaft 9 "Bilder" wurde mit den hier über die logischen Namen zugeordneten Bildern "Bild 1, Bild 2,..." belegt. Auf analoge Weise wird auch der Artikeltyp 8 "Motorisierung" gebildet, der die beiden Artikeleigenschaften 9 "Verbrauch" und "Emission" aufweist, die jeweils den Contenttyp 2 "Zahl" 5 aufweisen. Bei der Ausgestaltung zu dem Artikel 21 "2.0 1 MZR-CD" werden die Artikelinhalte 13 "6,3" und "173" zu dem Artikeltyp 8 "Motorisierung" zugeordnet. Hier sind also Artikelinhalte 13 jeweils vom Contenttyp 2 "Zahl" 5 eindeutig zugeordnet. Der Artikeltyp 8 "Aktion" besteht aus Artikeleigenschaften 9 mit unterschiedlichen Contenttypen 2, die den Vorteil der verschiedenen Contentypen zeigt. Es ist insbesondere für die Artikeleigenschaft 9 "Gültigkeit" keine Eingabe des Datums z.B. als "31. Dezember 2007" anstelle von "31.12.2007" möglich, sodass im weiteren keine Probleme durch unterschiedliche Zeichenlängen auftreten können. Der Artikeltyp 8 "Händler" ist schließlich ein Beispiel dafür, dass die Artikelinhalte aus allen 3 Speichern gleichzeitig den Artikel 21 "Autohaus Geis" bilden, wobei "Text" 4, "Bilder" 3 und eine "Adresse" 7 kombiniert werden. Zusätzlich werden die Artikel 21 in globalen Kategorien 22 gruppiert, um ein Unterscheidungsmerkmal für die Artikel 21 zu erhalten. Die globalen Kategorien 22 werden über Einstellungen 23 definiert und modifiziert. Eine Artikelverwaltung 24 ermöglicht das Abspeichern der Artikel 21 sowie den einfachen Zugriff auf einzelne Artikel 21. Die Artikelverwaltung 24 umfasst auch eine Suchfunktion, mit der insbesondere nach den globalen Kategorien 22 und dem Artikelnamen gesucht werden kann. Eine Kategorisierung der Artikel 21 nach Inhalten, Zielgruppen oder Themen wie auch nach äußeren Merkmalen wie Farbigkeit, Format oder Inhaltsart ist dabei möglich.

Über die Shop-Funktion 20 wählt der Nutzer des weiteren ein Werbemittel 25 aus, das mit der Layoutvorlage 11 verbunden wird. Die Werbemittel 25 werden in einer Werbemittelverwaltung 26 erfasst und gespeichert, wodurch eine Vielzahl von verschiedenen Werbemitteln 25 bereitgestellt werden kann. Es ist eine beliebige Verknüpfung einer Layoutvorlagen 11 mit einem Werbemittel 25 möglich, die jedoch keine anderen Kombinationen ausschließt.

Über die Shop-Funktion 20 gelangt der Nutzer in einen Editierassistent 27, in dem das Werbemittel 25 angezeigt und durch den Nutzer bearbeitet werden kann. Entsprechend der bei der Erzeugung der Layoutvorlage 11 vorgenommenen Einstellungen werden die Artikelinhalte 13 in der vorgegebenen Reihenfolge und auf die vorgegebene Art und Weise editiert bzw. ausgewählt. Der Nutzer wird durch die Editierung des Layouts 1 des Werbemittels 25 geführt und erhält genau die Editiermöglichkeiten, die für ihn im Rahmen der globalen Vorgaben vorgesehen und zur Ausgestaltung des Werbemittels 25 notwendig sind. Der Editierassistent 27 selber kann dabei abhängig von der Art des Werbemittels 25 gestaltet werden, um die weiteren Bearbeitungsmöglichkeiten darauf abzustimmen. Einstellungen des Nutzers zum Editierassistent 25 selber können entsprechend dessen Präferenzen ebenfalls gespeichert und bei der erneuten Nutzung wieder zur Verfügung gestellt werden. Die Verwendung der Contenttypen 2 bestimmt dabei auf elementarer Ebene, wie die einzelnen Artikelinhalte 13 im Editierassistent 27 dargestellt und zur Editierung angeboten werden. Die Bearbeitung geschieht auf Basis von allgemein verwendeten HTML-Funktionalitäten, sodass sich der Nutzer nicht in ein proprietärers System einarbeiten muss. Dies können übliche Freitextfelder, Drop-Down Menüs oder Radio Buttons sein.

Das von dem Nutzer ausgestaltete Layout 1 wird dann zunächst ebenfalls gespeichert und in das Portable Document Format (PDF) überführt. Für diesen Schritt wird erneut die Pageflex Technologie genutzt. Es stehen daher sowohl ein Layout 1 zur Verfügung, das weiterhin in dem Editierassistent 27 bearbeitet werden kann, wie auch ein Format, in dem Änderungen an dem Layout 1 nicht mehr möglich sind, und das daher universell für den weiteren Produktionsprozess des Werbemittels 25 genutzt werden kann. Das Layout 1 im Format PDF wird in der Mediengalerie 16 gespeichert.

Der Nutzer entscheidet im weiteren, wie mit dem fertigen Werbemittel 25 verfahren wird. In einem nicht gezeigtem Bestellprozess sind der Download- oder die Druckbestellung möglich, wobei alle notwendigen Informationen vom Nutzer vorgegeben werden. Diese Informationen fließen dann in den weiteren Bestellprozeß ein.

Für das Verfahren ist außerdem wichtig, dass die Implementierung bis auf die das User-Interfaces der Shop-Funktion 20 und des Editierassistenten 27 auf einer zentralen Datenverarbeitungsvorrichtung durchgeführt ist, so dass alle Speicher und die Funktionalität gemeinsam abgelegt sind. Diese Datenverarbeitungsvorrichtung agiert daher als ein Server und ist über eine sichere Internetverbindung mit einer dezentralen Datenverarbeitungsvorrichtung, einem Client, verbunden. Die User-Interfaces der Shop-Funktion 20 und des Editierassistenten 27 werden auf der dezentralen Datenverarbeitungsvorrichtung zur Verfügung gestellt. So kann der Nutzer auf alle Daten und Funktionalitäten der zentralen Datenverarbeitungsvorrichtung zugreifen und gleichzeitig können alle Änderungen von dem Nutzer an die zentrale Datenverarbeitungsvorrichtung zurück übertragen. Damit kann die Bearbeitung mit allen Datenverarbeitungsvorrichtungen durchgeführt werden, die mit dem Internet verbunden sind. Dies ist heutzutage sehr weit verbreitet, genauso wie die Ausstattung mit einen Internet-Browser, so dass die meisten Datenverarbeitungsvorrichtungen für den Einsatz als Client geeignet sind. Der Nutzer hat ausschließlich Zugriff auf diese beiden User-Interfaces und kann daher die globalen Vorgaben für die Erstellung des Layouts 1 nicht in unbeabsichtigter Weise verändern oder umgehen.

Der Zugriff auf die Artikeltypenverwaltung 9, die Artikelverwaltung 24, die Templateverwaltung 12 und die Werbemittelverwaltung 26 geschieht auf eine ähnliche Weise, indem die Datenspeicher und die Funktionalitäten zur Bearbeitung von einem zentralen Server zur Verfügung gestellt werden, während das User-Interface auf einer dezentralen Client zur Verfügung gestellt wird, und die beiden Datenverarbeitungsvorrichtungen über eine sichere Internetverbindung miteinander kommunizieren. Somit können auch die globalen Vorgaben z.B. für mehrere Kunden oder mehrere Projekte bearbeitet werden, ohne dass entsprechende Administratoren die diese globalen Vorgaben eingeben, direkt an der zentralen Datenverarbeitungsvorrichtung arbeiten müssen.

## Patentansprüche

1. Verfahren zur Gestaltung eines Layouts (1) für ein Werbemittel oder dergleichen, das eine Mehrzahl von Feldern mit Inhalten unterschiedlicher Contenttypen (2) wie Bilder (3), Texte (4) und / oder ein Datum (6) umfasst, durch einen Nutzer mit Hilfe einer elektronischen Datenverarbeitungsvorrichtung, bei welchem
- unterschiedliche Contenttypen (2) definiert werden,
- unterschiedliche Artikeltypen (8) definiert werden, indem jeweils wenigstens ein Feld mit einem Contenttyp (2) verknüpft wird und jedem Artikeltyp (8) mehrere thematisch gleichartige Artikelinhalte (13) des entsprechenden Contenttyps (2) für Produkte einer Produktgruppe zugeordnet werden,
- wenigstens eine Layoutvorlage (11) erstellt wird, indem eine Mehrzahl von Artikeltypen (8) ausgewählt und innerhalb eines Layoutrahmens positioniert werden,
- der Nutzer eine Layoutvorlage (11) als Basis für das zu gestaltende Layout (1) und ein Produkt auswählt und
- die Layoutvorlage (11) zu dem Layout (1) ausgestaltet wird, indem für das ausgewählte Produkt spezifische Artikelinhalte (13) mit den zugehörigen Artikeltypen (8) der Layoutvorlage (11) unter Bildung konkreter Artikel (21) verknüpft werden.

2. Verfahren nach Anspruch 1, **dadurch gekennzeichnet, dass** wenigstens einem Artikeltyp (8) mehrere Artikelinhalte (13) zu demselben Produkt zugeordnet werden, und der Nutzer bei der Ausgestaltung des Layouts (1) in einem Editierschritt einen dieser Artikelinhalte (13) aus dieser Menge auswählen kann.

3. Verfahren nach Anspruch 2, **dadurch gekennzeichnet, dass** in einer Layoutvorlage (11) wenigstens zwei Artikeltypen (8) jeweils mehrere Artikelinhalte (13) zu einem Produkt zugeordnet sind, wobei die Artikeltypen (8) derart gekoppelt sind, dass in einem Editierschritt durch die Auswahl eines Artikelinhalts (13) für den einen Artikeltyp (8) der Artikelinhalt (13) für den anderen Artikeltyp (8) automatisch gewählt wird.

4. Verfahren nach einem der vorhergehenden Ansprüche, **dadurch gekennzeichnet, dass** in einem Editierschritt der Artikelinhalt (13) von wenigstens einem Artikeltyp (8) durch den Nutzer verändert werden kann.

5. Verfahren nach einem der Ansprüche 2 bis 4, **dadurch gekennzeichnet, dass** der Nutzer in einem geführten Editierschritt die Bearbeitung des Layouts (1) vornimmt, indem die einzelnen Editierschritte in einer Abfolge zur Bearbeitung angeordnet werden und / oder der Nutzer Benachrichtigungen zu der Durchführung der einzelnen Editierschritte erhält.

6. Verfahren nach einem der vorhergehenden Ansprüche, **dadurch gekennzeichnet, dass** den Artikeltypen (8) nutzerspezifische Artikelinhalte (13) und / oder zielgruppenspezifische Artikelinhalte (13) zugeordnet sind.

7. Verfahren nach einem der vorhergehenden Ansprüche, **dadurch gekennzeichnet, dass** die Contenttypen (2) graphische Typen und alphanumerische Typen umfassen.

8. Verfahren nach einem der vorhergehenden Ansprüche, **dadurch gekennzeichnet, dass** die Artikeltypen (8) auch Felder einschließen, die andere Artikeltypen (8) enthalten.

9. Verfahren nach einem der vorhergehenden Ansprüche, **dadurch gekennzeichnet, dass** die Artikel (21) zur Verwaltung in globale Kategorien (22) eingeordnet werden.

10. Verfahren nach einem der vorhergehenden Ansprüche, **dadurch gekennzeichnet, dass** das Layout (1) in einer universellen Beschreibungssprache dargestellt wird.

11. Verfahren nach einem der vorhergehenden Ansprüche, **dadurch gekennzeichnet, dass** das Layout (1) in das XML Format umgewandelt wird und Variablen enthält, mit denen die Verknüpfungen der Artikeltypen (8) mit dem Speicher realisiert werden.

12. Verfahren nach einem der vorhergehenden Ansprüche, **dadurch gekennzeichnet, dass** die Layoutvorlage (11) mit Pageflex-Technologie und unter Benutzung von Filterfunktionen erzeugt wird.

13. Verfahren nach einem der vorhergehenden Ansprüche, **dadurch gekennzeichnet, dass** das Werbemittel (25) mit dem Layout (1) dem Nutzer über eine Shop-Funktion (20) zur Verfügung gestellt wird.

14. Verfahren nach einem der vorhergehenden Ansprüche, **dadurch gekennzeichnet, dass** das Layout (1) des Werbemittels (25) über die Shop-Funktion (20) durch den Nutzer bearbeitet werden kann.

15. Verfahren nach einem der vorhergehenden Ansprüche, **dadurch gekennzeichnet, dass** das Werbemittel (25) mit dem Layout (1) nach der Bearbeitung durch den Nutzer an einen Arbeitsprozess übergeben wird, in dem das Werbemittel (25) mit dem Layout (1) hergestellt wird.

16. Verfahren nach einem der vorhergehenden Ansprüche, **dadurch gekennzeichnet, dass** das Layout (1) nach der Bearbeitung durch den Nutzer in ein anderes Format umgewandelt wird.

17. Verfahren nach Anspruch 16, **dadurch gekennzeichnet, dass** als das andere Format das Portable Document Format (PDF) eingesetzt wird.

18. Verfahren nach einem der Ansprüche 16 oder 17, **dadurch gekennzeichnet, dass** die Umwandlung in ein anderes Format mit Pageflex-Technologie durchgeführt wird.

19. Verfahren nach einem der vorhergehenden Ansprüche, **dadurch gekennzeichnet, dass** das Layout (1) durch den Nutzer durch die Auswahl von weiteren Artikeln (21) erweiterbar ist.

20. Verfahren nach einem der vorhergehenden Ansprüche, **dadurch gekennzeichnet, dass** für die Contenttypen (2), die Artikeltypen (8), die Artikelinhalte (13), die Textinhalte (14) sowie Inhalte aus einem Addressmodul (15) oder einer Mediengalerie (16) sein können, die Artikel (21), die globalen Kategorien (22), die Werbemittel (25), die Zielgruppen und das Layout (1) jeweils ein Speicher vorgesehen ist, in dem sie abgelegt und verwaltet werden.

21. Verfahren nach Anspruch 20, **dadurch gekennzeichnet, dass** alle Speicher zu einer Datenbank mit einem zentralen Speicher zusammengefaßt sind.

22. Verfahren nach einem der vorhergehenden Ansprüche, **dadurch gekennzeichnet, dass** das Verfahren in einer Client Server Architektur realisiert wird, wobei der zentrale Speicher auf dem Server vorgesehen ist und die Bearbeitung des Layouts (1) auf wenigstens einem Client durchgeführt wird.

23. Verfahren nach Anspruch 23, **dadurch gekennzeichnet, dass** der wenigstens eine Client mit dem Server über das Internet verbunden ist.

24. Verfahren nach Anspruch 23, **dadurch gekennzeichnet, dass** die Internet-Verbindung zwischen dem Server und dem wenigstens einen Client verschlüsselt ist.

25. Verfahren nach einem der vorhergehenden Ansprüche, **dadurch gekennzeichnet, dass** die Shop-Funktion (20) mittels eines Internet-Shops zur Verfügung gestellt wird.

26. Verfahren nach Anspruch 25, **dadurch gekennzeichnet, dass** das Layout (1) in einem Internet-Browser dargestellt und bearbeitet wird.

27. Verfahren nach Anspruch 26, **dadurch gekennzeichnet, dass** die Bearbeitung des Layouts (1) auf Basis von HTML-Funktionalitäten geschieht.
